# EUROPEAN PATENT APPLICATION

(11) **EP 2 184 683 A1**
(43) Date of publication of application: **12.05.2010**
(21) Application number: 09013830.6
(22) Date of filing: 03.11.2009
(51) Int. Cl.: G06F 12/02

(54) **Backup method, backup device, and vehicle controller**

(30) Priority: 07.11.2008 JP 2008286466
(71) Applicant: Keihin Corporation, Shinjuku-ku, Tokyo (JP)
(72) Inventor: Kawaguchi, Taishi, Tochigi-ken (JP)
(74) Representative: Eisenführ, Speiser & Partner

(57) **Abstract**

A backup method includes the following processes. Backup data is temporarily stored in a volatile memory. An erased area is saved in a flash memory for the backup data. The erased area is free of data. The backup data is written in the erased area.

## Description

### BACKGROUND OF THE INVENTION

### Field of the Invention

The present invention relates to a backup method, a backup device, and a vehicle controller.

Priority is claimed on Japanese Patent Application No. 2008-286466, filed on November 7, 2008, the content of which is incorporated herein by reference.

### Description of the Related Art

All patents, patent applications, patent publications, scientific articles, and the like, which will hereinafter be cited or identified in the present application, are incorporated by reference in their entirety in order to describe more fully the state of the art to which the present invention pertains.

Generally, an SRS (Supplemental Restraint System) air-bag system is known as a system for occupant protection upon a vehicle collision. In the SRS air-bag system, a collision is detected based on acceleration data obtained from acceleration sensors provided in a vehicle to activate an occupant protection device, such as an air-bag or a seatbelt pretensioner. An ECU (Electronic Control Unit) that controls the entire SRS air-bag system is called an SRS unit, and is usually provided separately from other ECUs, such as ECUs for an engine and an ABS (Anti-Brake System).

For example, Japanese Unexamined Patent, First Publication No. 2003-252256 discloses a technology for analyzing vehicle information (such as velocity, acceleration, braking information, or acceleration information) upon a collision to investigate the causes of the collision. According to the technology, vehicle information obtained from various sensors or other ECUs is sequentially updated and stored while a vehicle is running, and the vehicle information stored in a RAM is read upon detecting a vehicle collision and stored in an EEPROM (Electronically Erasable and Programmable Read Only Memory).

Conventionally, an EEPROM has been used as a backup memory for storing nonvolatile data (backup data), such as the vehicle information. On the other hand, cheaper and faster-writable flash memory has been recently required to be used in lieu of the EEPROM with an increasing amount of data to be stored as backup data. However, there are the following problems in using a flash memory.

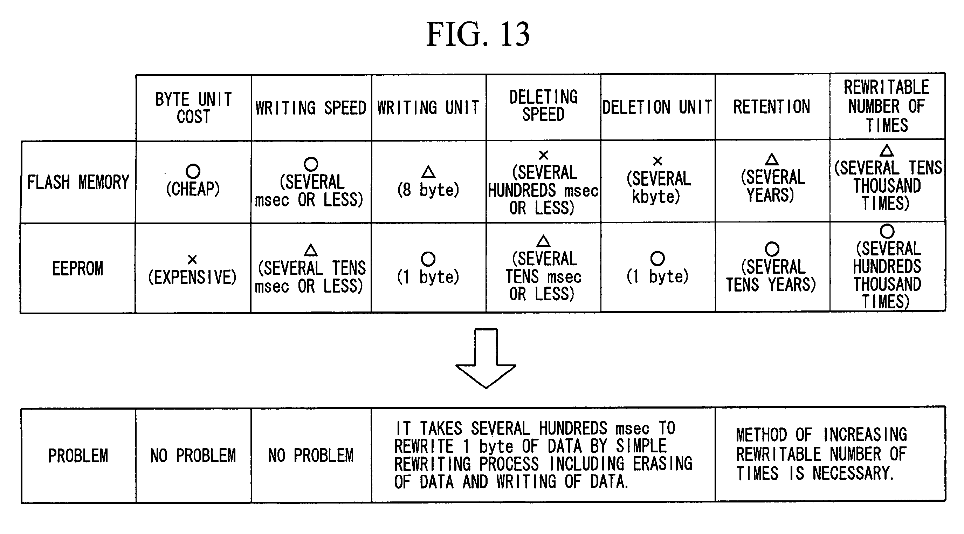

FIG 13 is a performance comparison chart between a flash memory and an EEPROM. The flash memory is superior to the EEPROM in "byte unit price" and "writing speed," but is inferior in "writing unit," "erasing speed," "erasing unit," "retention (the number of years for storing data)," and "the rewritable number of times." In other words, the flash memory has problems in that the rewritable number of times is small and a writing time is long (several hundred msec is required for rewriting 1 byte of data if a simple rewriting operation including erasing of data and writing of data is executed).

### SUMMARY OF THE INVENTION

To solve the above problems, a backup method according to a first aspect of the present invention includes the following processes. Backup data is temporarily stored in a volatile memory. An erased area is saved in a flash memory for the backup data. The erased area is free of data. The backup data is written in the erased area.

The process of saving the erased area includes the following processes. A total size of the erased area is detected. All data written in a block of the flash memory is erased when the total size becomes a predetermined size or less. Erasing data written in part of the block is inhibited. The block has a start address next to an end address of the erased area. The end address is determined when the total size becomes the predetermined size or less.

In the process of erasing all the data written in the block, if the backup data most-recently written is included in the block to be erased, the backup data most-recently written is moved to the start address of the erased area before all the data in the block are erased.

The backup method further includes the following process. The backup data most-recently written in an area of the flash memory which is different from the erased area, and a destination address of the flash memory in which the backup data most-recently written is present are stored in the volatile memory.

The backup method further includes the following processes. The backup data newly-stored in the volatile memory is compared to the backup data most-recently written in the destination address. The backup data newly-stored is newer than the backup data most-recently written. The backup data newly-stored is written in the erased area from a start address of the erased area if the backup data most-recently written in the destination address is not identical to the backup data newly-stored. The destination address and the start address of the erased area are updated.

The process of writing the backup data is executed by the sector defined as a recording unit. The flash memory is divided into a plurality of sectors.

A backup device according to a second aspect of the present invention includes: a volatile memory; a flash memory; and a controller. The controller temporarily stores backup data in the volatile memory, saves an erased area in the flash memory for the backup data, the erased area being free of data, and writes the backup data in the erased area.

In the backup device, the controller detects a total size of the erased area, and erases all data written in a block of the flash memory when the total size becomes a predetermined size or less. Erasing data written in part of the block being inhibited. The block has a start address next to an end address of the erased area. The end address is determined when the total size becomes the predetermined size or less.

In the backup device, if the backup data most-recently written is included in the block to be erased, the controller moves the backup data most-recently written to the start address of the erased area before erasing all the data in the block.

In the backup device, the controller stores, in the volatile memory, the backup data most-recently written in an area of the flash memory which is different from the erased area, and a destination address of the flash memory in which the backup data most-recently written is present.

In the backup device, the controller compares the backup data newly-stored in the volatile memory to the backup data most-recently written in the destination address. The backup data newly-stored is newer than the backup memory most-recently written. The controller writes the backup data newly-stored in the erased area from a start address of the erased area if the backup data most-recently written in the destination address is not identical to the backup data newly-stored. The controller updates the destination address and the start address of the erased area.

In the backup device, the controller writes the backup data by the sector defined as a recording unit. The flash memory is divided into a plurality of sectors.

A vehicle controller according to a third aspect of the present invention comprises a backup device comprising: a volatile memory; a flash memory; and a controller. The controller temporarily stores backup data in the volatile memory, saves an erased area in the flash memory for the backup data, the erased area being free of data, and writes the backup data in the erased area.

In the present invention, an erased area is always saved in a flash memory, instead of simply executing a rewriting operation including erasing of data and writing of data stored in the flash memory. In other words, erasing of data is preliminarily executed in a different timing from the timing of writing of data. Accordingly, a time for rewriting backup data stored in the flash memory can be reduced since only a writing operation which is not time-consuming is required for updating backup data.

Additionally, although the rewritable number of times per cell in the flash memory is the same, the wear level per cell can be reduced by writing backup data in the erased area sequentially from the start address of the erased area. Consequently, the upper limit of the rewritable number of times of the flash memory can be increased.

### BRIEF DESCRIPTION OF THE DRAWINGS

Objects, features, aspects, and advantages of the present invention will become apparent to those skilled in the art from the following detailed descriptions taken in conjunction with the accompanying drawings, illustrating the embodiments of the present invention, in which:
FIG. 1 is a schematic block diagram illustrating an SRS unit 1 including a backup device according to an embodiment of the present invention;
FIG 2 illustrates a storage area of a flash memory 1h;
FIG 3 is a flowchart illustrating an initialization process when a CPU 1d included in the SRS unit 1 is powered-on;

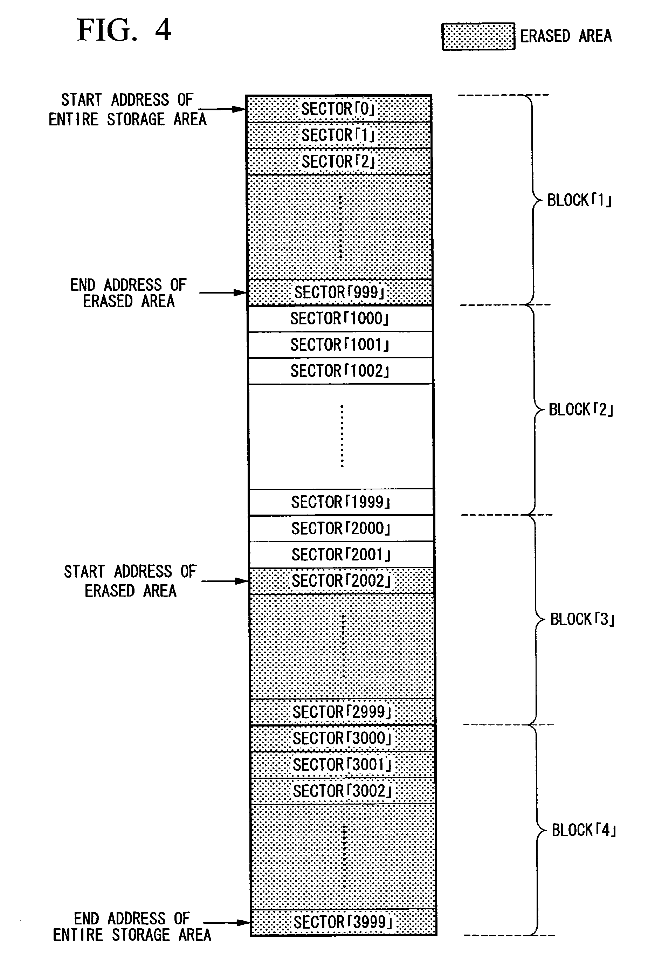

FIGS. 4 and 5 illustrate a blank check process included in the initialization process;
FIG. 6 illustrates a data mounting process included in the initialization process;
FIG. 7 is a flowchart illustrating a backup process in a normal operation performed by the CPU 1d;
FIGS. 8 and 9 illustrate a data writing process included in the backup process;
FIGS. 10 to 12 illustrate a garbage collection process included in the backup process; and
FIC. 13 is a performance comparison chart between a flash memory and an EEPROM.

### DETAILED DESCRIPTION OF THE INVENTION

The present invention will now be described herein with reference to illustrative embodiments.

Those skilled in the art will recognize that many alternative embodiments can be accomplished using the teachings of the present invention and that the present invention is not limited to the embodiments illustrated herein for explanatory purposes.

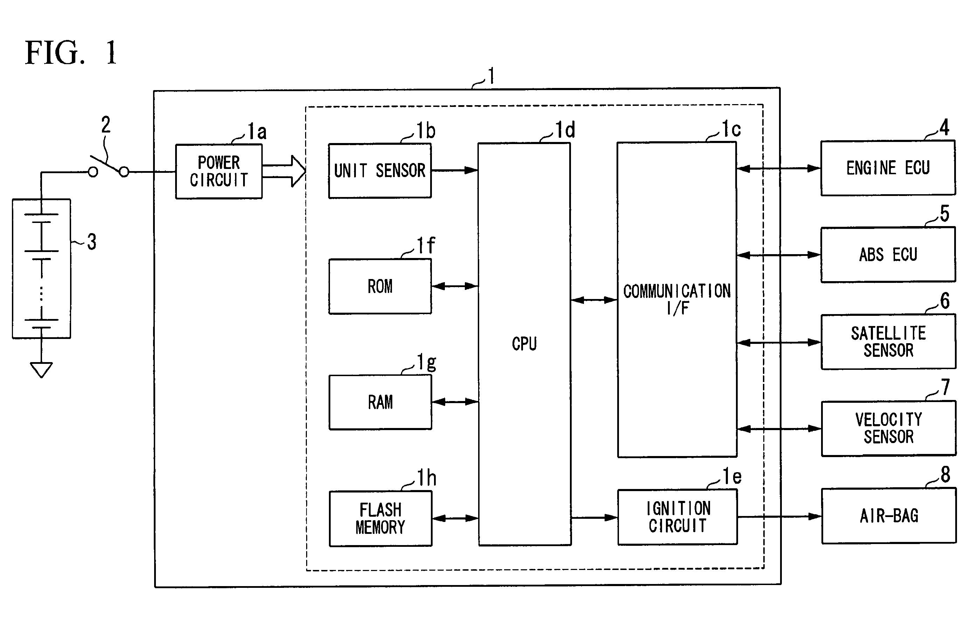

FIG 1 is a schematic block diagram illustrating a vehicle ECU including a backup device according to an embodiment of the present invention. An SRS unit 1 that controls an entire SRS air-bag system for occupant protection is taken as an example of the vehicle ECU.

The SRS unit 1 includes: a power circuit 1a; a unit sensor 1b; a communication I/F 1c; a CPU (Central Processing Unit) 1d; an ignition circuit 1e; a ROM (Read Only Memory) 1f; a RAM (Random Access Memory) 1g; and a flash memory 1h. The CPU 1d and the RAM 1g correspond to a memory controller and a volatile memory, respectively. In other words, the CPU 1d, the RAM 1g, and the flash memory 1h form a backup device.

The power circuit 1a is connected to an external power source 3, such as a battery, through an ignition switch 2. When the ignition switch 2 changes to an on-state, the power circuit 1a receives power voltage supply from the external power source 3, converts the power voltage into a predetermined internal power voltage, and supplies the converted power voltage to the unit sensor 1b, the communication I/F 1c, the CPU 1d, the ignition circuit 1e, the ROM If, the RAM 1 g, and the flash memory 1h. The power circuit 1a is provided with a backup power source (such as a backup capacitor) so that the SRS unit 1 can operate even when power supply from the external power source 3 is blocked due to a vehicle collision.

The unit sensor 1b is an acceleration sensor that detects acceleration in the running direction and/or the lateral direction, and outputs acceleration data based on the detected acceleration to the CPU 1d. The communication I/F 1c is an interface circuit to relay data communication between the CPU 1d and an engine ECU 4, an ABS ECU 5, a satellite sensor 6, and a velocity sensor 7, which are externally provided.

The engine ECU 4 controls an engine and transmits information concerning a condition of the engine (engine data) to the CPU 1d through the communication I/F 1c. The ABS ECU 5 controls the entire anti-brake system and transmits information concerning braking (braking data) to the CPU 1d through the communication I/F 1c. The satellite sensor 6 is an acceleration sensor provided at a predetermined position of a vehicle (such as at the front or either side of the vehicle), detects an acceleration at the provided portion, and transmits acceleration data based on the detected acceleration to the CPU 1d through the communication I/F 1c. The velocity sensor 7 detects the velocity of the vehicle and transmits velocity data based on the detected velocity to the CPU 1d through the communication I/F 1c.

The CPU 1d operates based on control programs stored in the ROM If. The CPU 1d determines whether or not a vehicle collision has occurred based on the acceleration data obtained from the unit sensor 1b and the acceleration data obtained from the satellite sensor 6 through the communication I/F 1c. Based on the determination result, the CPU 1d controls the ignition circuit 1e, and thereby controls activation of the air-bag 8 that is an occupant protection device. A method similar to the conventional methods can be used for the collision determination based on the acceleration data, and therefore explanations thereof are omitted hereinafter.

The CPU 1d has a function of counting the number of times the ignition switch 2 has turned on (number of times activated), and a fault diagnosis function. The CPU 1d temporally stores, in the RAM 1g, the number of times activated, the fault diagnosis history, the collision determination history, the activation history of the air-bag 8, the engine data, the braking data, the velocity data, or the like, as backup data. Further, the CPU 1d has a backup function of storing the backup data stored in the RAM 1g in the flash memory 1h with a fulfillment of a predetermined condition as a trigger. The details of the backup function will be explained later.

Under control of the CPU 1d, the ignition circuit 1e inflates the air-bag 8 by supplying current to a scriber included in an inflator of the air-bag 8 for ignition. The air-bag 8 includes air-bags for driver's and passenger's seats, a side air-bag, a curtain air-bag, and the like. In addition to the air-bag 8, a seatbelt pretensioner may be provided as a passenger protection device.

The ROM 1f is a nonvolatile read-only memory that preliminarily stores nonvolatile data required for the control programs and the activation control of the air-bag 8 executed by the CPU 1d. The RAM 1g is a rewritable volatile memory to be used for temporally storing the aforementioned backup data or volatile data required for the CPU 1d to execute various processing. The flash memory 1h is a nonvolatile rewritable memory to be used as a backup memory for storing, after the predetermined condition is fulfilled, the backup data temporally stored in the RAM 1g.

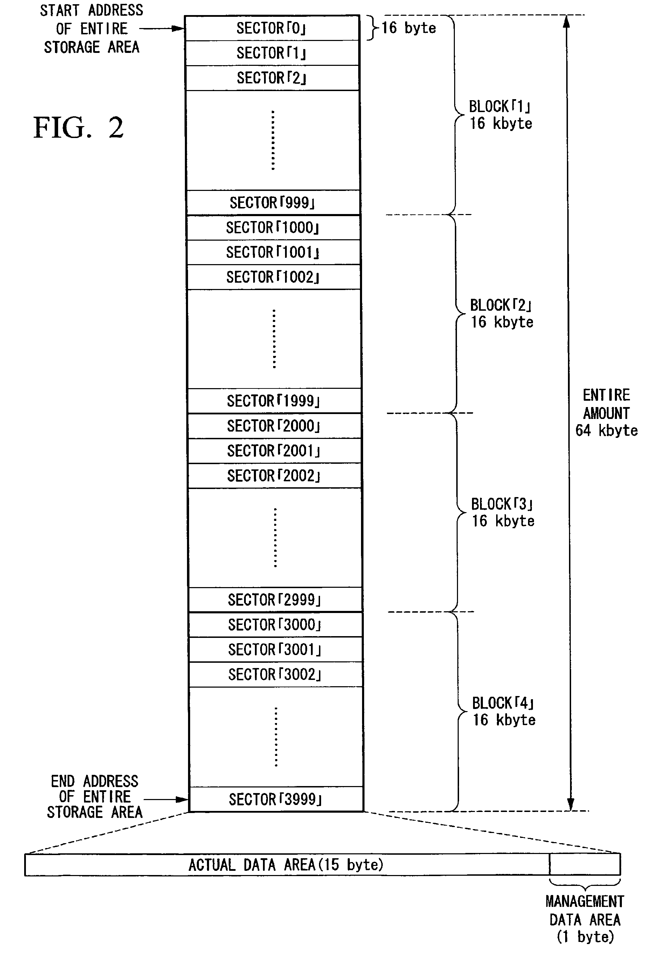

In the embodiment, the entire size of the flash memory 1h is assumed to be 64 kbytes, as shown in FIG 2. A storage area of the flash memory 1h is divided into sectors, each of which is a unit of a data record. A writing of backup data is executed by the sector. In the embodiment, one sector is assumed to have 16 bytes. Therefore, the storage area of the flash memory 1h is divided into 4000 sectors (sectors "0" to "3999").

15 bytes of the 16 bytes are assigned to an actual data area (storage area for storing backup data), and the remaining 1 byte is assigned to a management data area (storage area for storing management data indicative of the type of backup data stored in the actual data area). For example, if velocity data is stored as backup data in a sector, the velocity data is stored in the actual data area, and management data indicating that the velocity data is stored in the actual data area is stored in the management data area. If all the backup data to be stored cannot be stored in one sector, multiple sectors are assigned to store the backup data.

In the flash memory 1h of the embodiment, erasing of the stored backup data is executed by the block that is the minimum erasable unit. Since a block is assumed to have 16 kbytes in the embodiment, the storage area of the flash memory 1h is divided into four blocks ("1" to "4"), and 1000 pieces of sector data are collectively erased for each block.

It is assumed in the embodiment that an address of the sector "0" is the minimum address, an address of the sector "3999" is the maximum address, the address of the sector "0" is a start address of the entire storage area, and the address of the sector "3999" is an end address of the entire storage area.

Hereinafter, an operation of the SRS unit 1 according to the embodiment is explained. An activation control of the air-bag 8 in the embodiment is the same as the conventional one. Therefore, explanations of the activation control are omitted here, and only backup of backup data is explained in detail, hereinafter.

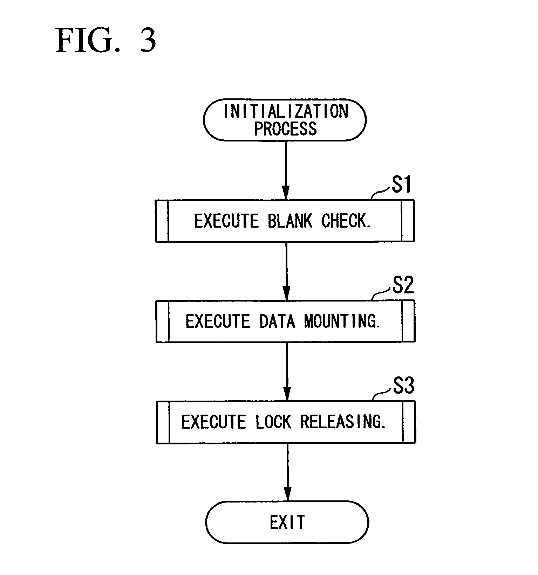

FIG. 3 is a flowchart illustrating an initialization process executed by the CPU 1d when the ignition switch 2 turns on. In the initialization process, the CPU 1d executes a blank check process on the flash memory 1h (step S1). In the blank check process, all the sectors from the start to end addresses of the storage area of the flash memory 1h are scanned to find an erased area and to extract start and end addresses of the erased area. The erased area is an area in which data has been erased.

For example, if all the sectors included in the block "1 ", the sectors "2002" to "2999" included in the block "3 ", and all the sectors included in the block "4" are erased areas, the address of the sector "2002" is the start address of the erased area, and the address of the sector "999" is the end address of the erased area. As explained layer, the reason is that writing of backup data is executed sequentially from the start address of the erased area (smaller address), and that the writing continues from the sector "0" if the writing up to the sector "3999" ends. If the backup data is erased (an erased area is saved), the backup data are erased by the block sequentially from the block having a start address next to the end address of the erased area.

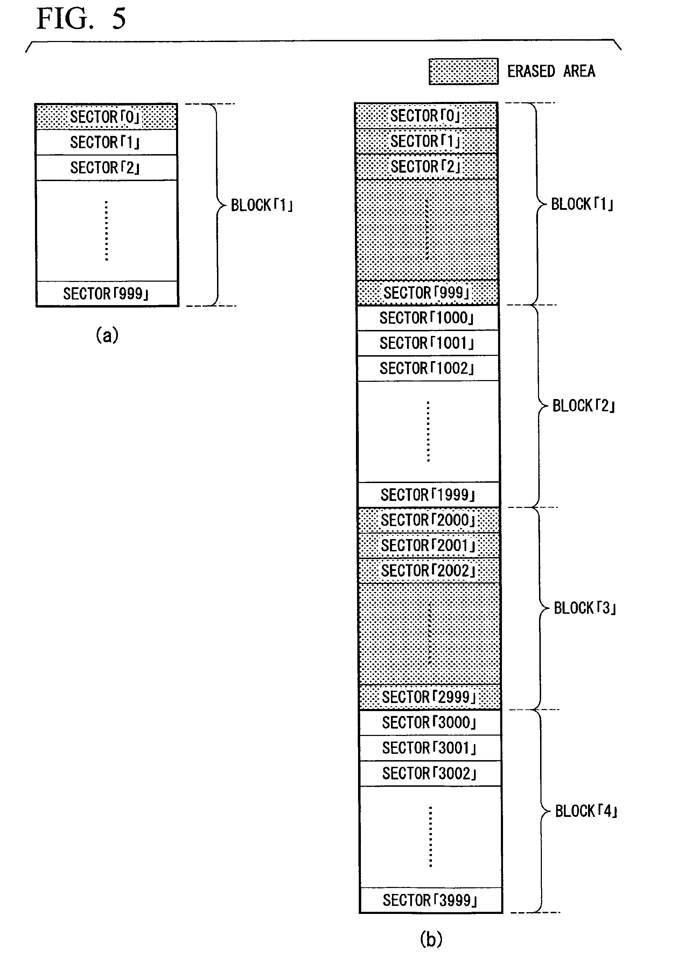

For this reason, a state in which only one sector having the smallest address of one block is the erased area as shown in FIG 5A or a state in which discrete areas are the erased areas as shown in FIG 5B cannot occur. Therefore, if the first sector having the start address of one block is the erased area, the block must be the erased block. Then, the block is subjected to the blank check. If an unerased sector is present in the block, the CPU 1d preferably outputs a fault indicating signal. Similarly, the CPU 1d preferably outputs a fault indicating signal if discrete erased areas are present as shown in FIG. 5B.

After the blank check process, the CPU 1d executes a data mounting process (step S2). In the data mounting process, latest backup data most-recently stored in an area other than the erased area detected in the blank check process (i.e., an area storing backup data) and a latest-data destination address in which the latest backup data is stored are read out to be stored as a table in the common storage area of the RAM 1g.

Specifically, if the sectors "1000" to "2001" that are not the erased area are included in the flash memory 1h, the same type of backup data (e.g., backup data concerning velocity data) are searched based on the management data stored in the sectors "1000" to "2001" to extract the latest backup data therefrom. Since backup data is written sequentially from the smallest address, the backup data stored in the sector having the largest address is the latest backup data.

Then, the extracted latest backup data (e.g., the latest velocity data) and the latest-data destination address (in which the latest backup data is stored) are correlated with the management data to be stored as a table in the common storage area of the RAM 1g. Similarly, regarding another type of backup data (e.g., the number of times the ignition circuit has turned on, the fault diagnosis history, or the like), the latest backup data and the latest-data destination address thereof are extracted from the sectors "1000" to "2001" to be correlated with the management data to be stored as a table in the common storage area of the RAM 1g. The start and end addresses of the erased area obtained in the blank check process are also stored in the RAM 1g.

After the data mounting process, the CPU 1d executes a lock release process (step S3). Specifically, the lock release process is executed to release a lock mechanism if the lock mechanism for prohibiting writing of data into the flash memory 1h is provided. If a lock mechanism is not provided in the flash memory 1h, the process in step S3 may be omitted.

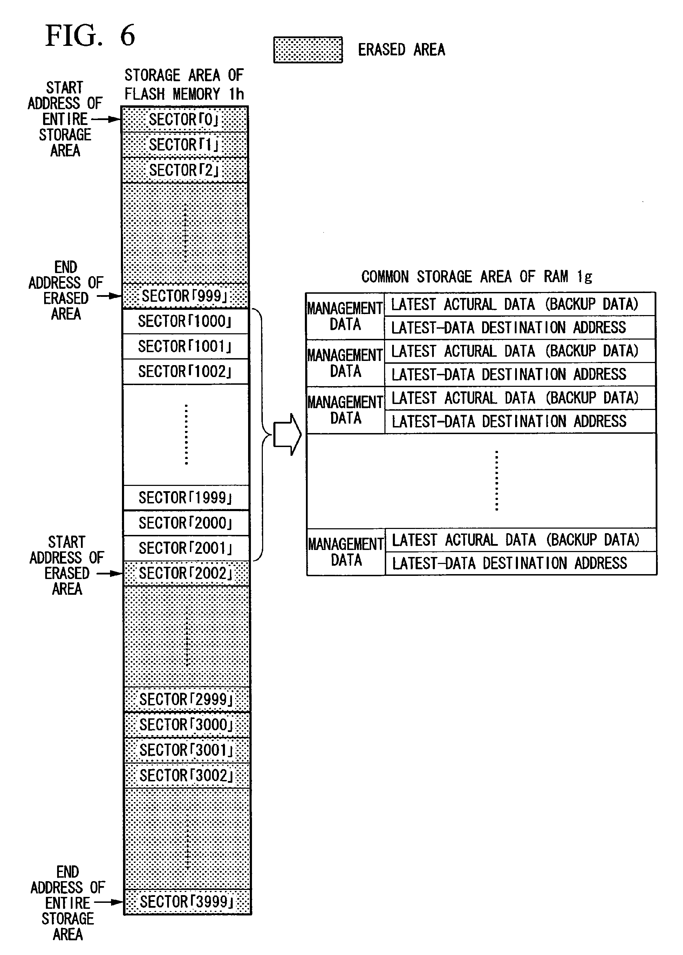

By the initialization process upon power-on as explained above, the latest backup data stored in the flash memory 1h and the latest-data destination address thereof are correlated with the management data to be stored as a table in the common storage area in the RAM 1g, as shown in FIG 6. Further, the start and end addresses of the erased area are also stored in the RAM 1g.

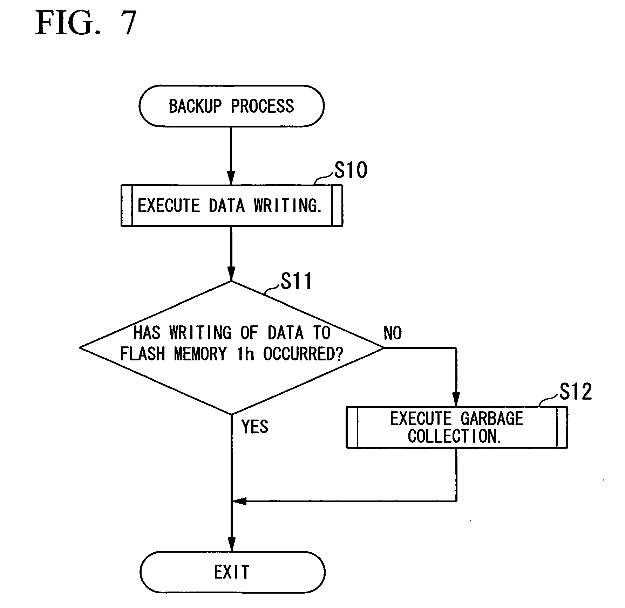

Hereinafter, a backup process in a normal operation executed by the CPU 1d is explained with reference to the flowchart in FIG 7. The backup process is repeatedly executed at a predetermined interval. As well as the backup process, the CPU 1d executes, in the normal operation, updates the backup data stored in the common storage area of the RAM 1g in the initialization process to newly obtained backup data at a predetermined interval. In other words, in the normal operation, the backup data stored in the common storage area of the RAM 1g are sequentially updated to new backup data. Hereinafter, the backup process is explained assuming the above.

In the backup process, the CPU 1d executes a data writing process on the flash memory 1h (step S10), as shown in FIG 7. In the data writing process, the backup data stored in the common storage area of the RAM 1g and the backup data stored in the latest-data destination address of the flash memory 1h are compared. If the two backup data are not identical (i.e., a predetermined condition is fulfilled), the backup data is read out from the common storage area of the RAM 1g, and is sequentially written in the flash memory 1h from the start address of the erased area of the flash memory 1h.

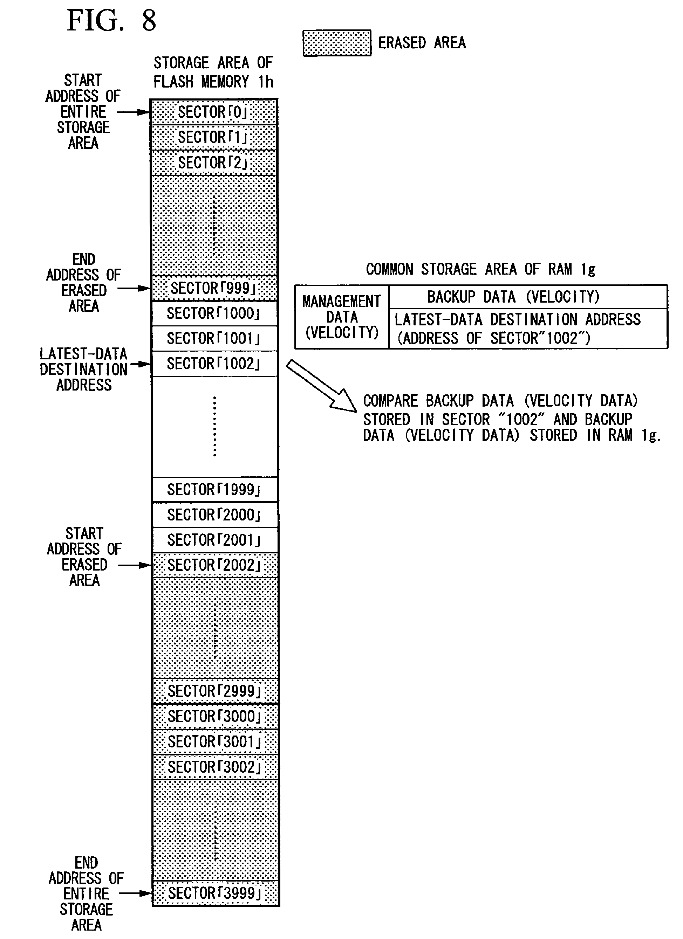

Specifically, it is assumed as shown in FIG 8 that a latest-data destination address of the velocity data among the backup data stored in the common storage area of the RAM 1g is the address of the sector "1002". In this case, the CPU 1d compares the velocity data stored in the common storage area of the RAM 1g and the velocity data stored in the sector "1002" of the flash memory 1h.

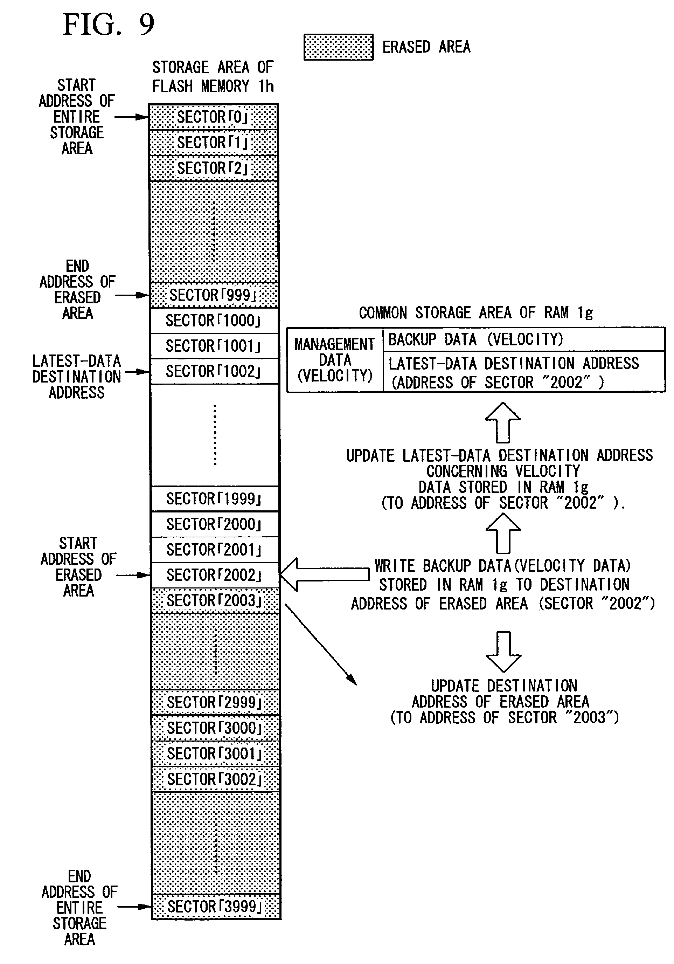

If both data are not identical, the CPU 1d reads the velocity data from the common storage area of the RAM 1g, and writes the read velocity data in the start address of the erased area (the address of the sector "2002"), as shown in FIG. 9. At the same time, the CPU 1d updates the latest-data destination address of the velocity data stored in the RAM 1g to the address of the sector "2002", and also updates the start address of the erased area to the address of the sector "2003".

By the data writing process being executed for each type of backup data, new backup data is written sequentially from the start address of the erased area, and the latest-data destination address on the RAM 1g and the start address of the erased area are sequentially updated. In other words, the latest-data destination address on the RAM 1g always indicates a destination of the latest backup data belonging to the targeted type, and the start address of the erased area on the RAM 1g always indicates the latest start address of the erased area present in the flash memory 1h.

After the data writing process, the CPU 1d determines whether or not writing of data to the flash memory 1h has occurred (step S11). If writing of data occurs (step S11: YES), the CPU 1d finishes the backup process. If the writing of data has not occurred (step S11: NO), the CPU 1d executes a garbage collection process (step S12). In the garbage collection process, the CPU 1d monitors the total size of erased areas included in the flash memory 1h. If the total size becomes a predetermined size or less, the CPU 1d erases backup data stored in the block having the start address next to the end address of the erased area, and thereby a predetermined size of an erased area is always saved.

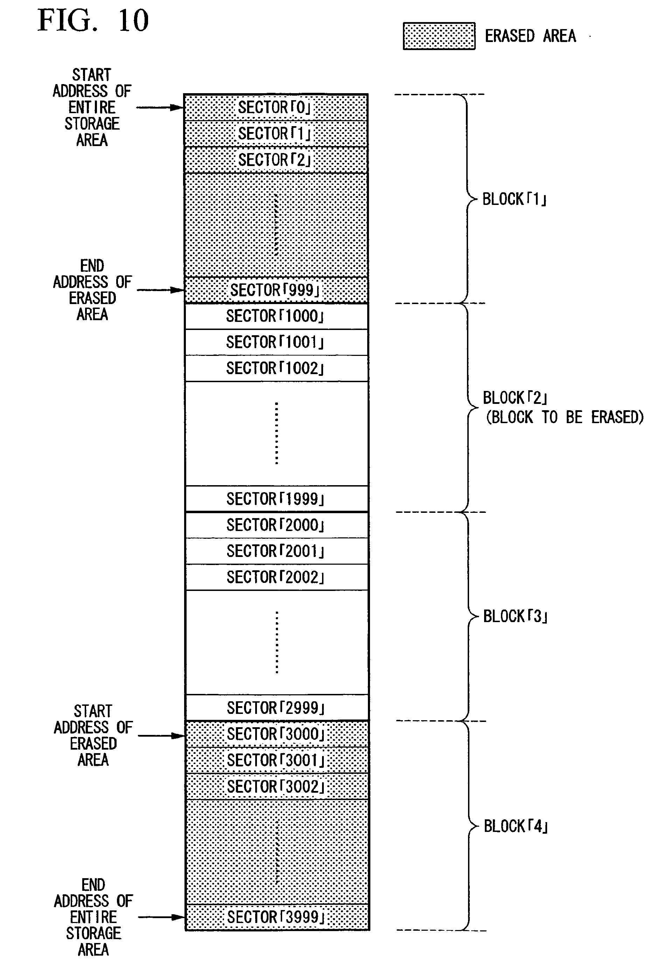

For example, it is assumed that erasing of data in a block is executed if the total size of the erased area becomes the size corresponding to 2 blocks or less. If the blocks "1" and "4" are erased areas as shown in FIG. 10, backup data stored in the block "2" targeted for erasing is erased. The total size of erased areas can be calculated using the start and end addresses of the erased area stored in the RAM 1g.

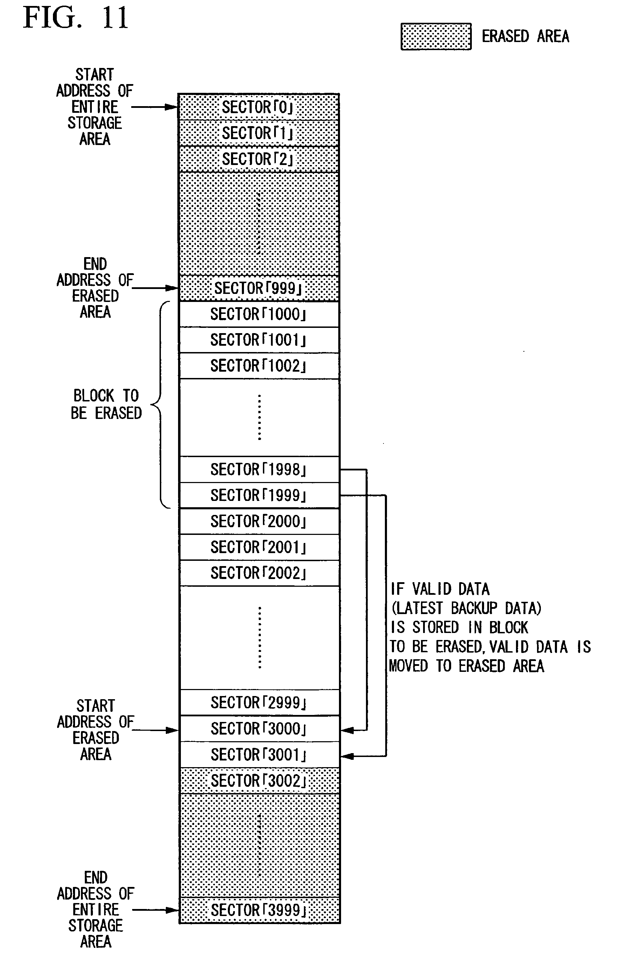

If valid data (i.e., the latest backup data) is stored in the block "2" targeted for erasing, the latest backup data is written sequentially from the start address of the erased area, and then the backup data stored in the block "2" is erased. Specifically, it is assumed as shown in FIG. 11 that the latest backup data are stored in the sectors "1998" and "1999" included in the block "2" targeted for erasing. The backup data stored in the sector "1998" is written in the sector "3000" that is the start address of the erased area. Further, backup data stored in the sector "1999" is written in the sector "3001" which is the address next to the start address of the erased area.

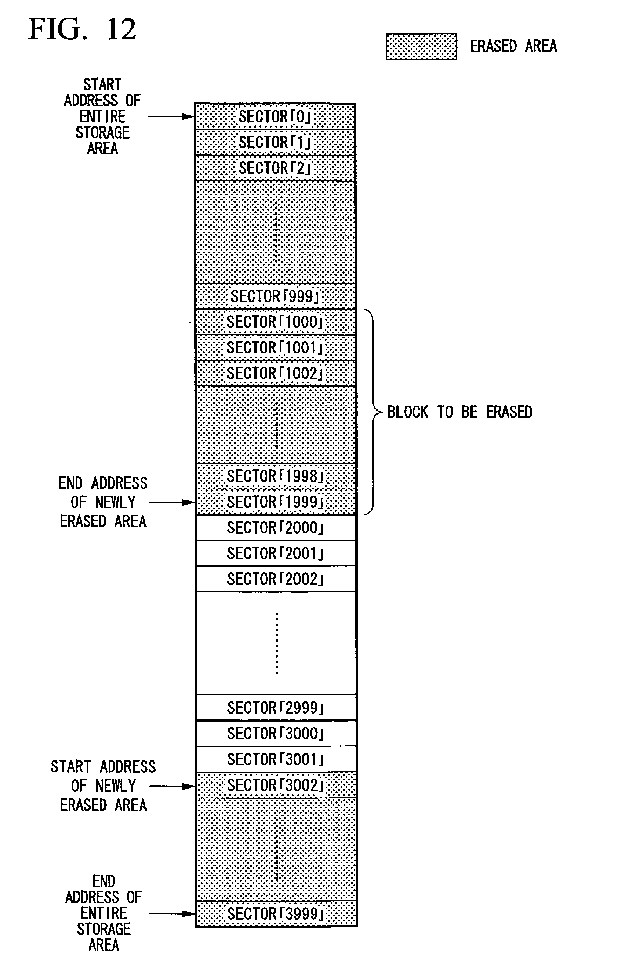

After the backup data is moved as explained above, the backup data stored in the block "2" targeted for erasing is erased as shown in FIG 12. At the same time, the start and end addresses of the erased area stored in the RAM 1g is updated. In other words, the start and end addresses of the new erased area become the addresses of the sectors "3002" and "1999", respectively.

By repeating the backup process explained above at a predetermined interval, a predetermined size (corresponding to at least two blocks) of the erased area is always saved in the storage area of the flash memory 1h, and new backup data is written sequentially from the start address of the erased area.

In other words, the flash memory 1h is not rewritten by a simple rewriting process including erasing of data and writing of data in the embodiment. Instead, only an erasing process requiring a long processing time is executed while backup data is not updated (rewritten) so that a predetermined size of the erased area is always saved. Consequently, only a writing process which is not time consuming is executed when actually updating backup data. Therefore, the time required for rewriting backup data stored in the flash memory 1h can be reduced.

Although the rewritable number of times defined for each cell of the flash memory 1h is not changed, the wear level per cell can be reduced by writing new backup data sequentially from the start address of the erased area. Consequently, the upper limit of the rewritable number of times for the flash memory 1h can be substantially increased. For example, if it is assumed that the total size of backup data is 2 kbyte, the rewritable number of times corresponding to the predetermined number of times multiplied by 8 can be secured for one block of 16 kbyte. Further, the rewritable number of times corresponding to the predetermined number of times multiplied by 32 can be secured for the entire 4 blocks.

As explained above, according to the present embodiment, the specific problems in using a flash memory as a backup memory (i.e., a long rewriting time and the small rewritable number of times) can be solved.

It has been explained in the embodiment that the SRS unit 1 that controls the entire SRS air-bag system is taken as an example of a vehicle ECU including a backup device including the CPU 1d, the RAM 1g, and the flash memory 1h. However, the backup device of the embodiment is applicable to any vehicle ECU requiring a backup function (for example, the engine ECU 4), and to any electronic device requiring a backup function.

It is apparent that the present invention is not limited to the above embodiments, but may be modified and changed without departing from the scope and spirit of the invention.

## Claims

1. A backup method comprising:
temporarily storing backup data in a volatile memory;
saving an erased area in a flash memory for the backup data, the erased area being free of data; and
writing the backup data in the erased area.

2. The backup method according to claim 1, wherein saving the erased area comprises:
detecting a total size of the erased area; and
erasing all data written in a block of the flash memory when the total size becomes a predetermined size or less, erasing data written in part of the block being inhibited, the block having a start address next to an end address of the erased area, and the end address being determined when the total size becomes the predetermined size or less.

3. The backup method according to claim 2, wherein erasing all the data written in the block comprises, if the backup data most-recently written is included in the block to be erased, moving the backup data most-recently written to the start address of the erased area before erasing all the data in the block.

4. The backup method according to claim 1, further comprising:
storing, in the volatile memory, the backup data most-recently written in an area of the flash memory which is different from the erased area, and a destination address of the flash memory in which the backup data most-recently written is present.

5. The backup method according to claim 4, further comprises:
comparing the backup data newly-stored in the volatile memory to the backup data most-recently written in the destination address, the backup data newly-stored being newer than the backup memory most-recently written;
writing the backup data newly-stored in the erased area from a start address of the erased area if the backup data most-recently written is not identical to the backup data newly-stored; and
updating the destination address and the start address of the erased area.

6. The backup method according to claim 1, wherein writing the backup data comprises writing the backup data by the sector defined as a recording unit, the flash memory being divided into a plurality of sectors.

7. A backup device, comprising:
a volatile memory;
a flash memory; and
a controller that temporarily stores backup data in the volatile memory, saves an erased area in the flash memory for the backup data, the erased area being free of data, and writes the backup data in the erased area.

8. The backup device according to claim 7, wherein the controller detects a total size of the erased area, and erases all data written in a block of the flash memory when the total size becomes a predetermined size or less, erasing data written in part of the block being inhibited, the block having a start address next to an end address of the erased area, and the end address being determined when the total size becomes the predetermined size or less.

9. The backup device according to claim 8, wherein if the backup data most-recently written is included in the block to be erased, the controller moves the backup data most-recently written to the start address of the erased area before erasing all the data in the block.

10. The backup device according to claim 7, wherein the controller stores, in the volatile memory, the backup data most-recently written in an area of the flash memory which is different from the erased area, and a destination address of the flash memory in which the backup data most-recently written is present.

11. The backup device according to claim 10, wherein the controller
compares the backup data newly-stored in the volatile memory to the backup data most-recently written in the destination address, the backup data newly-stored being newer than the backup memory most-recently written,
writes the backup data newly-stored in the erased area from a start address of the erased area if the backup data most-recently written in the destination address is not identical to the backup data newly-stored, and
updates the destination address and the start address of the erased area.

12. The backup device according to claim 7, wherein the controller writes the backup data by the sector defined as a recording unit, the flash memory being divided into a plurality of sectors.

13. A vehicle controller comprising a backup device comprising:
a volatile memory;
a flash memory; and
a controller that temporarily stores backup data in the volatile memory, saves an erased area in the flash memory for the backup data, the erased area being free of data, and writes the backup data in the erased area.
